# EUROPEAN PATENT SPECIFICATION

(11) **EP 0 599 793 B1**
(45) Date of publication and mention of the grant of the patent: **15.10.1997**
(21) Application number: 93850215.0
(22) Date of filing: 12.11.1993
(51) Int. Cl.: A01C 7/20

(54) **Device for a seed drill**
Gerät für eine Sämaschine
Appareil pour un semoir

(30) Priority: 27.11.1992 SE 9203576
(43) Date of publication of application: 01.06.1994
(73) Proprietor: AKTIEBOLAGET ÖVERUMS BRUK, 590 96 Överum (SE)
(72) Inventor: Ruuska, Mauno, SF-382 10 Vammala (FI); Linderoth, Sven, S-235 91 Vellinge (SE)
(74) Representative: Erixon, Bo

(56) References cited:
- DE-A- 3 933 345
- FR-A- 2 471 125
- GB-A- 2 043 419

## Description

This invention relates to a device for a seed drill or the like comprising two frame beams arranged mainly horizontally and transversely to the direction of movement of the seed drill each supporting several arms with drill coulters, the drill coulters being placed in two lines which are mainly parallel with the frame beams.

Conventional seed drills are used to place seed at a desired depth in a land and comprise a great number of spring loaded drill coulters being arranged beside each other so that when the machine is moved on the land the same number of seed rows are formed. During the last years steps have been taken to reduce the cultivating work of the land thereby increasing the amount of straw on the land causing an increased risk for the straw to get stuck at the seed drill thereby preventing the drill coulters from penetrating the desired depth. When this occurs the seed drill has to be stopped and cleaned from the straw.

In order to reduce this risk seed drills have usually, see GB-A-2043419, been manufactured with the coulter arms placed in two or several parallel lines extending transversely to the direction of movement of the seed drill, a large distance between the lines resulting in an increased possibility for the straw to pass through. With these arrangements the seed drill normally comprises transverse beams on which the arms which support the seed coulters are hinged and the arms are placed below the beams.

The disadvantage with this arrangement is that it gives limited possibilities to fulfill the basic demands of the drill coulter which are sufficient space in front of the coulter, free movement upwards and an optimum low disposal of the pivot point.

Another solution is to use coulter arms having different lengths, the arms being hinged on a common beam of the frame which however has the disadvantage that it demands for variations with respect to the components involved as well as the function.

The purpose of this invention is to achieve a seed drill having identical coulter arms which have the same function caracteristics, the space in front of the drill coulters and below the arms being so large that there is no major risk for straw or other objects to get stuck in it. At the same time the arrangement has the advantage that the drill coulters have a possibility to move a large distance in the vertical plane and that the pivot point can be arranged rather low. This is achieved with a device having the caracteristics mentioned in the claims.

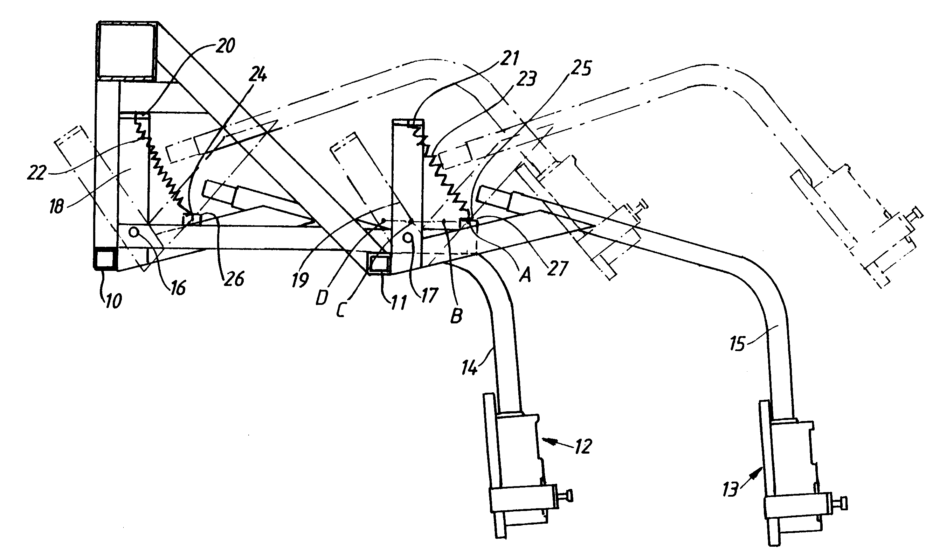

An embodiment of the invention will now be described with reference to the accompanying drawing showing a side view of a seed drill according to the invention in which the parts of the seed drill which are not important for the invention are not shown.

The seed drill shown in the figure comprises two mainly horizontal beams 10, 11 of the frame which are parallel with respect to each other and extend transversely to the direction of movement of the seed drill. The beams are parts of the frame of which the seed drill is built up and which supports a hopper, not shown, for the seed and conventional means, not shown, by means of which the seed is fed and transported from the hopper to the drill coulters 12, 13. A large number of such drill coulters are placed beside each other so that two coulter lines which are parallel with the beams are formed. The coulters 12 in the front line are placed between the coulters 13 of the rear line seen in the length direction of the coulter lines. Each coulter is fastened at the outer end of an arm 14, 15 which is pivotally supported at a pivot point 16, 17 at one of the beams 10, 11 the coulter arms 14 of the front line extending above the rear beam 11 and between the arms 15. Thus, the arms with the drill coulter can move upwards and downwards in a verical plane. Each arm 14, 15 has near the pivot point 16, 17 a mainly vertical bracket 18, 19 with an angular upper part 20, 21 serving as a first fastening point for the upper end of a tension spring 22, 23 whereas the lower end of the spring is fastened at a second, lower fastening point 24, 25 in the frame. Suitably the second fastening points 24, 25 for each line of drill coulter are so arranged that they can be moved between several positions on the frame, for instance the positions A-D in the figure. This means that the the coulter pressure can be set with regard to the circumstances. When the lower fastening point is moved from position A towards position C the coulter pressure will gradually decrease and if the force direction of the spring is moved to the other side of the pivot point, that is to position D, the spring force becomes lifting for the coulters. In order to make this adjustment some kind of element 26, 27 is used which element is slidable or movable on the frame and on which the lower fastening points for several springs belonging to each coulter line are arranged.

It should be pointed out that the above arrangement also can be used for devices spreading fertilizers or in so called combined machines by means of which seed as well as fertilizer can be spread.

## Claims

1. Device for a seed drill or the like comprising two frame beams (10,11) arranged mainly horizontally and transversely to the direction of movement of the seed drill each supporting several arms (14,15) with drill coulters (12,13) the drill coulters being placed in two lines which are mainly parallel with the frame beams (10,11), **caracterized in** that the arms (14) which are fastened to the front frame beam (10) extend above the rear frame beam (11).

2. Device according to claim 1, **caracterized in** that the arms (14) which are fastened to the front frame beam (10) have the same dimensions as those being fastened to the rear frame beam (11).

3. Device according to any of the preceding claims **caracterized in** that the arms (14,15) are pivotally fastened to the frame beams (10,11).

4. Device according to claim 3, **caracterized in** that the arms (14, 15) are under the influence of a spring (22,23).

5. Device according to claim 4, **caracterized in** that it comprises means (26,27) for changing the spring force.

6. Device according to claim 5, **caracterized in** that said means (26,27) are movable with respect to the frame.

7. Device according to claim 5, **caracterized in** that each of said means (26,27) cooperates with several springs for adjusting the spring forces for several arms simultaneously.

8. Device according to claim 5, **caracterized in** that said means are so arranged that the coulter pressure can achieve a negative value in order to lift the coulter (pos. D).

## Patentansprüche

1. Vorrichtung für eine Sähdrillmaschine oder ähnliches, mit zwei Rahmenstreben (10, 11), die im wesentlichen horizontal und quer zur Bewegungsrichtung der Sähdrillmaschine angeordnet sind, die jeweils mehrere Arme (14, 18) mit Drillpflugmessern (12, 13) halten, wobei die Drillpflugmesser in zwei Reihen angeordnet sind, die im wesentlichen parallel zu den Rahmenstreben (10, 11) sind, **dadurch gekennzeichnet, daß** die Arme (14), die an der vorderen Rahmenstrebe (10) befestigt sind, sich über die hintere Rahmenstrebe (11) hinaus erstrecken.

2. Vorrichtung nach Anspruch 1, **dadurch gekennzeichnet, daß** die Arme (14), die an der vorderen Rahmenstrebe (10) befestigt sind, die selben Abmessungen haben wie diejenigen, die an der hinteren Rahmenstrebe (11) befestigt sind.

3. Vorrichtung nach einem der vorhergehenden Ansprüche, **dadurch gekennzeichnet, daß** die Arme (14, 15) schwenkbar an den Rahmenstreben (10, 11) befestigt sind.

4. Vorrichtung nach Anspruch 3, **dadurch gekennzeichnet, daß** die Arme (14, 15) unter dem Einfluß einer Feder (22, 23) stehen.

5. Vorrichtung nach Anspruch 4, **dadurch gekennzeichnet, daß** sie Einrichtungen (26, 27) zur Änderung der Federkraft hat.

6. Vorrichtung nach Anspruch 5, **dadurch gekennzeichnet, daß** die Einrichtungen (26. 27) bezüglich des Rahmens beweglich sind.

7. Vorrichtung nach Anspruch 5, **dadurch gekennzeichnet, daß** jede der Einrichtungen (26, 27) mit mehreren Federn zusammenwirkt, zur gleichzeitigen Einstellung der Federkräfte für mehrere Arme.

8. Vorrichtung nach Anspruch 5, **dadurch gekennzeichnet, daß** die Einrichtungen so angeordnet sind, daß der Pflugmesserdruck einen negativen Wert annehmen kann, um das Pflugmesser anzuheben (Pos. D).

## Revendications

1. Dispositif équipant un semoir en lignes ou un appareil similaire comprenant deux poutrelles (10, 11) de châssis agencées, pour l'essentiel, horizontalement et transversalement par rapport à la direction de mouvement du semoir en lignes et supportant, chacune, plusieurs bras (14, 15) associés à des coutres (12, 13), les coutres étant placés en deux rangées pour l'essentiel parallèles aux poutrelles (10, 11) du châssis, caractérisé par le fait que les bras (14), fixés à la poutrelle antérieure (10) du châssis, s'étendent au-dessus de la poutrelle postérieure (11) dudit châssis.

2. Dispositif selon la revendication 1, caractérisé par le fait que les bras (14), fixés à la poutrelle antérieure (10) du châssis, présentent les mêmes dimensions que ceux fixés à la poutrelle postérieure (11) dudit châssis.

3. Dispositif selon l'une quelconque des revendications précédentes, caractérisé par le fait que les bras (14, 15) sont fixés aux poutrelles (10, 11) du châssis avec faculté de pivotement.

4. Dispositif selon la revendication 3, caractérisé par le fait que les bras (14, 15) sont soumis à l'action d'un ressort (22, 23).

5. Dispositif selon la revendication 4, caractérisé par le fait qu'il comporte des moyens (26, 27) pour modifier la force du ressort.

6. Dispositif selon la revendication 5, caractérisé par le fait que lesdits moyens (26, 27) sont mobiles par rapport au châssis.

7. Dispositif selon la revendication 5, caractérisé par le fait que chacun desdits moyens (26, 27) coopère avec plusieurs ressorts pour régler, simultanément, les forces des ressorts affectés à plusieurs bras.

8. Dispositif selon la revendication 5, caractérisé par le fait que lesdits moyens sont agencés de telle sorte que la pression des coutres puisse atteindre une valeur négative, en vue de soulever les coutres (position D).
